# EUROPEAN PATENT APPLICATION

(11) **EP 1 382 997 A2**
(43) Date of publication of application: **21.01.2004**
(21) Application number: 03020696.5
(22) Date of filing: 28.10.1995
(51) Int. Cl.: G03B 27/73

(54) **Image reading device for photographic printing**

(30) Priority: 04.11.1994 JP 27125794
(62) Divisional of application: 95117017.4
(71) Applicant: Noritsu Koki Co., Ltd., Wakayama-shi, Wakayama-ken 640-8550 (JP)
(72) Inventor: Nakao, Hiroto, Wakayama-shi Wakayama-ken (JP)
(74) Representative: Hiltl, Elmar, Dr.

(57) **Abstract**

An image reading device for photographic printing, comprising an optical lens mechanism (42), a monochrome CCD image device (43) arranged at a focal position on an optical axis (L) of the optical lens mechanism (42), a filter rotation plate (45) rotatably arranged on the optical axis (L) and having a plurality of color filters, on a surface of which a ND coating is applied to restrict the transmitting light quantity, and a cut filter (46) for blocking unnecessary light existing on the optical axis, characterized in that the filter rotation plate (45) is tilted against the optical axis (L). By this arrangement flare and ghost in the image can be prevented.

## Description

The present invention relates to an image reading device for photographic printing in a photo-processing apparatus. More particularly, the present invention relates to an image reading device for photographic printing for reading the color image stored in the film by the CCD image element.

In the printing device for printing the color image stored in the developed film onto a photosensitive material, there is used an image reading device for photographic printing for reading the color image. As this image reading device for photographic printing, there are two kinds of devices, the one using the color CCD image element (hereinafter referred to as "color CCD") and the other using the monochrome CCD color element (hereinafter referred to as "monochrome CCD") to convert it to the color image by the color filter (spectral filter).

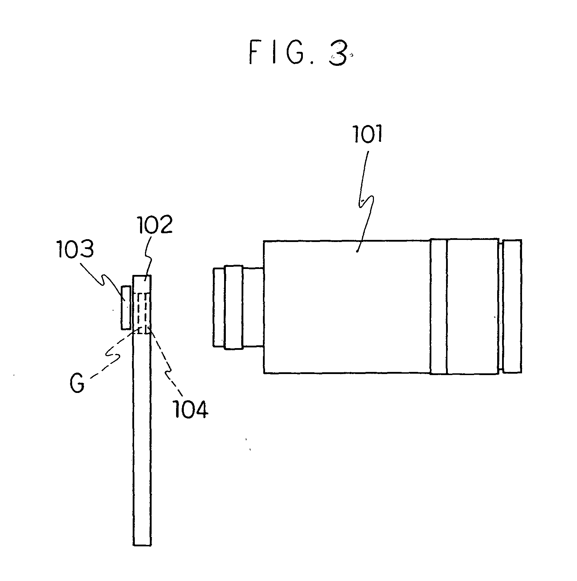

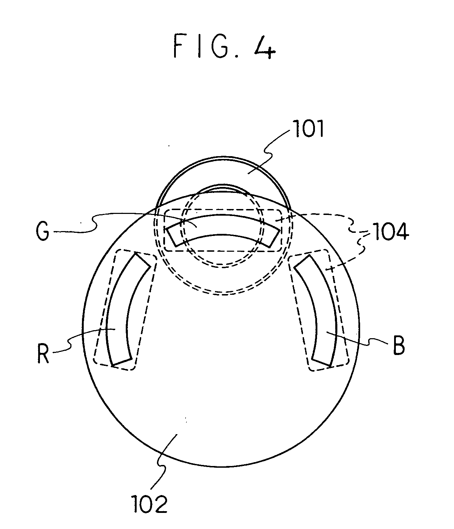

The device using the color CCD is generally not used because the spectral characteristics do not match with the sensitive material (paper sensitivity) in the photo devices (printer). On the contrary, the device using the monochrome CCD is, as shown in Fig. 3 and Fig. 4, composed of an optical lens mechanism 101 comprising a zoom lens arranged opposite to the film, a filter rotation disk 102 having color filters, a blue filter B, a green filter G and a red filter R, coaxially in the peripheral direction thereof, and a monochrome CCD 103. Since the light voltage of the respective filters B, G and R is strong in the order of filters R, G and B, the light quantity of the respective filters B, G and R is balanced by applying a dark ND coating to the filter R to restrict the transmitting light quantity and a ND coating thinner than that to the filter G, with making the light voltage of the filter B to be a reference. Thus, the device using the monochrome CCD has been generally used, since it can obtain the necessary spectral characteristics freely by combining color filters.

However, since the film of the ND coating becomes a strong reflection surface, the reflected light on the surface of the monochrome CCD 103 is sometimes reflected by the film of the ND coating to be incident over the monochrome CCD 103. In such a case, there is the problem that a phenomenon to degrade the contrast of the imaging plane of the monochrome CCD 103 (hereinafter referred to as a "flare") tends to be caused. There is further the problem that the light reflected several times on the surface of the zoom lens reaches the film surface to generate an image being out of focus other than the regular image (hereinafter referred to as a "ghost"). Furthermore, since cut filters 104 for removing the ultraviolet rays and infrared rays are stuck to the color filters B, G and R, other than respective spectral transmission films, the boundary plane to be stuck is likely to be the reflection surface, and the parallel degree of the stuck two filters is deteriorated due to the error of adhesive precision, so that the parallel degrees of respective filters B, G and R against the monochrome CCD 103 becomes non-uniform, which causes the problem that color divergence is likely to be caused.

US Patent 4809198 describes a method for setting and managing photographic printing conditions of a photographic printing system, wherein monocolor red, green and blue light is generated, a recording material is exposed thereto, reference images with density steps are prepared, said densities of the three color lights are measured, the measured densities are stored in a memory, amounts of exposure necessary for obtaining predetermined densities are determined, differences between said amounts of exposure and the reference amounts are obtained, and the amount of exposure for photographic printing is corrected in order to control the printing conditions.

In US 4942424 there is disclosed a color photographic printing method of printing a color film on the basis of a value of a light measuring device having a spectral sensitivity distribution which coincides with or is similar to a spectral sensitivity distribution of color paper layers sensitive to red, green and blue. The method comprises the steps of calculating the film characteristics of a film to be printed, comparing the film characteristics of a reference film with that of the film to be printed, and correcting the printing condition of the reference film according to the result of the comparing step as well as calculating the amount of exposure for printing.

JP-A-05063894 describes a picture reader provided with a photo electric conversion means with plural line sensors arranged at a tilt with respect to the optical axis of a read optical system. The purpose is to reduce the capacitance of a delay element by correcting any of the distances between object images among the plural line sensors with chromatic aberration of an image forming lens.

From JP-A-02150830 there is known a light measuring instrument for a photographic printer. For the tricolor separate light measurement, color filters are put in a printing optical path. Respective points of the image of a photographic film, which are projected through the color filters are measured by an image sensor through a ND filter.

In JP-A-06250298 is a photographic printing/exposing controller. Its purpose is to adjust the exposure of each color for an original image by means of the control of a color filter and a shutter. The controller makes it unnecessary to use an optical shutter plate having special spectroscopic characteristics.

The present invention has been completed under the above background and is defined by the appended claims 1 to 3. It is therefore a primary object of the present invention to provide an image reading device for photographic printing which can prevent the occurrence of the flare, ghost and color divergence and can obtain a clear color image.

In accordance with the invention, there is provided an image reading device for photographic printing, comprising an optical lens mechanism, a monochrome CCD image device arranged at a focal position on an optical axis of the optical lens mechanism, a filter rotation plate rotatably arranged on the optical axis and having a plurality of color filters, on a surface of which ND coating is applied to restrict transmitting light quantity, and a cut filter for blocking unnecessary light existing on the optical axis, characterized in that the filter rotation plate is tilted against the optical axis.

According to the image reading device for photographic printing of the invention, only by tilting the conventional rotation plate against the optical axis, the reflected light cannot be incident over the image-sensing plane of the monochrome CCD, and flare and ghost can be prevented better than with the conventional devices.
Fig. 1 is a schematic view of a photographic printing device which uses an image reading device for photographic printing of the present invention;
Fig. 2 is an elevational view showing one embodiment of the image reading device for photographic printing according to the invention;
Fig. 3 is an elevational view showing the conventional image reading device for photographic printing; and
Fig 4 is a left side view of the image reading device for photographic printing in Fig. 3.

Next, the image reading device for photographic printing of the present invention is explained based on the accompanying drawings.

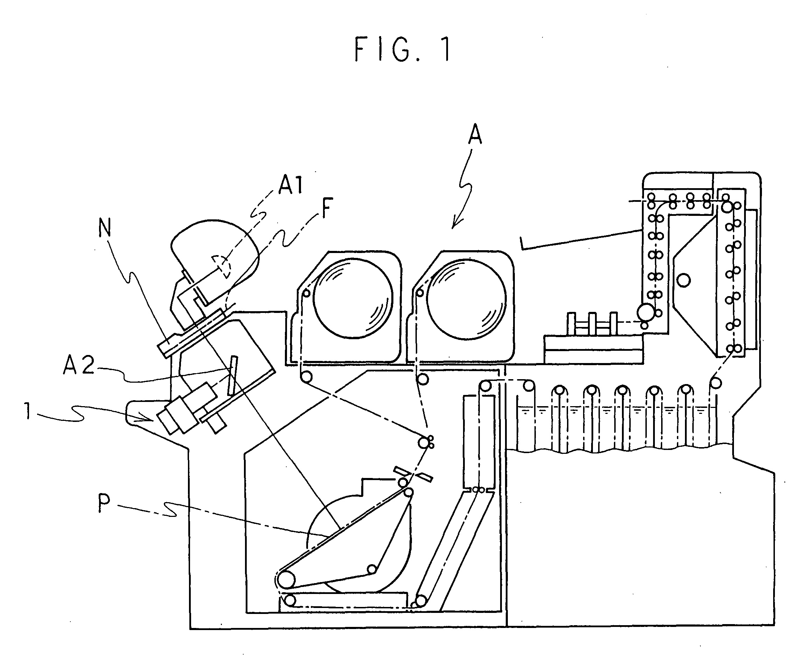

As shown in Fig. 1, the photographic printing device A which uses the image reading device for photographic printing of the present invention receives the light irradiated from a light source A1 via a mirror A2, reads the color image stored in the film F fed out from the negative mask N by the image reading device for the photographic printing, and, based on the read image information, performs printing to a photosensitive material P.

One embodiment of the image reading device for photographic printing according to the invention is described below.

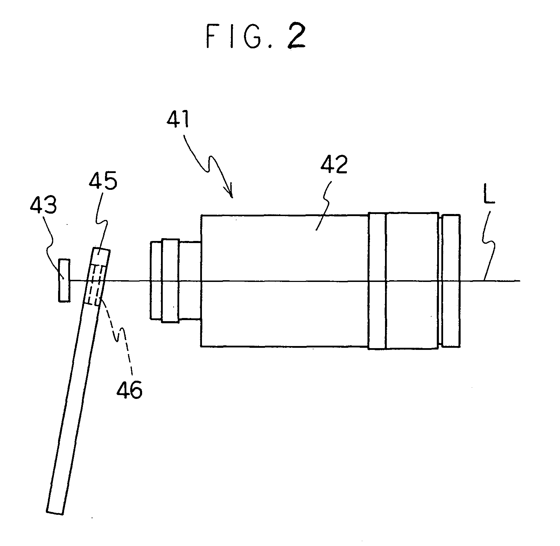

As shown in Fig. 2, the image reading device for photographic printing 41 is different in that the rotation plate in the conventional image reading device for photographic printing is arranged as being tilted against the optical axis L.

The tilt angle against said optical axis L is not particularly limited in the present invention, and it can be about 1 to 45°, preferably 5 to 10°.

In the present embodiment, by tilting the rotation plate 45, even if the reflected light from the image sensing plane of the monochrome CCD 43 is reflected on the planes of the respective tilted filters B, G and R, the reflected light is reflected toward outside of the image sensing plane of the monochrome CCD 43, whereby any flares and ghosts are not caused at all. Furthermore, in the present embodiment, the cut filter 46 is separated from the rotation plate 45 and arranged so as to be tilted in front of the optical lens mechanism 42, whereby the occurrence of the color divergence can be prevented.

Incidentally, the image reading device for photographic printing in the present invention is used to be mounted on the photographic printing device which reads the spectral data of the color image which is stored in the film and incident from the optical lens mechanism and respective filters B, G and R by rotating the rotor plate, then calculates the exposure conditions based on the data, and prints the image on the photosensitive material according to the conditions. Therefore, this printing device can generate clear prints, while preventing flares, ghosts and the color divergence by the image reading device for photographic in the present invention.

As described above, according to the image reading device for photographic printing of the invention, only by tilting the conventional rotation plate against the optical axis, flare and ghost can be prevented compared to the conventional device. Furthermore, by separating the cut filter from the rotor plate, arranging it to the optical lens mechanism, and tilting it against the optical axis, the occurrence of the color divergence can be further prevented.

Though several embodiments of the present invention are described above, it is to be understood that the present invention is not limited only to the above-mentioned, and various changes and modifications might be made without departing from the scope of the appended claims.

## Claims

1. An image reading device for photographic printing, comprising an optical lens mechanism (42), a monochrome CCD image device (43) arranged at a focal position on an optical axis (L) of the optical lens mechanism (42), a filter rotation plate (45) rotatably arranged on the optical axis (L) and having a plurality of color filters, on a surface of which a ND coating is applied to restrict the transmitting light quantity, and a cut filter (46) for blocking unnecessary light existing on the optical axis, **characterized in that** the filter rotation plate (45) is tilted against the optical axis (L).

2. The device of claim 1, wherein the cut filter (46) is housed within the optical lens mechanism (42).

3. The device of claim 1, wherein the cut filter (46) is tilted against the optical axis (L).
